# EUROPÄISCHE PATENTANMELDUNG

(11) **EP 0 524 133 A1**
(43) Veröffentlichungstag der Anmeldung: **20.01.1993**
(21) Anmeldenummer: 92710006.5
(22) Anmeldetag: 22.02.1992
(51) Int. Cl.: F16J 15/32

(54) **Wellendichtring**

(30) Priorität: 17.07.1991 DE 4123688
(71) Anmelder: GOETZE AG, D-51399 Burscheid (DE)
(72) Erfinder: Jung, Norbert, Dipl-Ing., W-5000 Köln 41 (DE); Vom Stein, Hans-Joachim, Dipl.-Ing., W-5632 Wermelskirchen 1 (DE); Stephan, Bernd, Dipl.-Ing., W-5630 Remscheid 11 (DE)

(57) **Zusammenfassung**

Die Erfindung betrifft einen Wellendichtring (1) mit einem Laufring (2), die über eine elastomere Haltevorrichtung (10) zu einer Dichtungseinheit verbunden sind. Der Laufring (2) erstreckt sich mit einem abgebogenen Bereich (9) radial zwischen einer Zusatzlippe (8) und der Haltevorrichtung (10), wobei der Axialabstand (a) etwa der halben Laufflächenbreite des Axialschenkels (7) entspricht.

## Beschreibung

Die Erfindung betrifft einen Wellendichtring mit einem Gehäuse zur drehfesten Aufnahme in einem Maschinenteil und einem profilierten Laufring, der im Einbauzustand die Welle mit einem axial gerichteten Schenkel drehfest und dicht umschließt, wobei der Schenkel als Lauffläche für eine am Gehäuse anvulkanisierte Dicht- und Schutzlippe aus elastomerem Werkstoff dient, sowie einer am radial außenliegenden Endbereich des Gehäuses angeordneten, radial nach innen sich erstreckenden Haltevorrichtung, die einen Radialschenkel des Laufringes übergreift, so daß vor dem Einbau Wellendichtring und Laufring formschlüssig miteinander verbindbar sind, und mit mindestens einer Zusatzlippe zur Bildung einer Kammer zwischen Schutzlippe und Zusatzlippe, wobei der Laufring einen radial außenliegenden Axialschenkel aufweist und die Zusatzlippe sich radial zwischen Axialschenkel und Gehäuse erstreckt.

Die Lauffläche der Dichtlippen bei Wellendichtringen hat entscheidenden Einfluß auf die Zuverlässigkeit des Dichtungssystemes. Um den Aufwand der Herstellung geeigneter Laufflächen in Grenzen zu halten, werden vielfach optimal konditionierte Laufringe eingesetzt. Derartige montagefertige Baueinheiten werden beispielsweise durch Umbördeln des Wellendichtringgehäuses zu einer Kassettendichtung zusammengefaßt.

Aus der EP-PA 0 337 893 ist eine solche Kassettendichtung zu entnehmen. Um die doppelte Aufgabe, Öl von innen und Schmutz von außen, dauerhaft und sicher zu trennen, weist der Wellendichtring neben der Öllippe und Schutzlippe eine axial gerichtete, an einem Radialschenkel des Laufringes anliegende Zusatzlippe auf. Darüber hinaus ist der Laufring mit weiteren Schutzlippen versehen, wobei als Lauffläche dieser Lippen das Wellendichtringgehäuse dient.

Die einwandfreie Funktion von Kassettendichtungen ist abhängig vom genauen Positionieren der Bauteile während der Montage. Wenn die axiale Positionierung zwischen Wellendichtring und Laufring nicht ideal erfolgt, kann es vorkommen, daß das Axialspiel zwischen Laufring und Gehäuse nicht ausreicht, eine Berührung beider Bauteile zu verhindern.

Hinzu kommt, daß moderne schnellaufende Motoren und Getriebe mit hoher Leistungsdichte axiale Zusatzbewegungen beispielsweise durch Wärmedehnungen erfahren, die sich nachteilig auf das Dichtungssystem auswirken. Bei axial gerichteten Schutzlippen, wie beim genannten Stand der Technik, kann es vorkommen, daß die Schutzlippe entweder gar nicht oder so stark am Laufring anliegt, daß es zu Gummiabrieb kommt.

Der Erfindung liegt die Aufgabe zugrunde, einen gattungsgemäßen Wellendichtring dahingehend zu verbessern, daß insbesondere der Einsatz bei Wellen mit großen axialen Zusatzbewegungen möglich ist, und daß gleichzeitig die Herstellkosten gesenkt werden.

Diese Aufgabe wird erfindungsgemäß dadurch gelöst, daß die Zusatzlippe mit dem Gehäuse verbunden ist und der Axialschenkel des Laufringes als Lauffläche für die Zusatzlippe dient, wobei der Endbereich des Axialschenkels radial nach außen abgebogen ist und sich radial zwischen Zusatzlippe und Haltevorrichtung erstreckt, derart,-daß der Axialabstand zwischen Haltevorrichtung und abgebogenem Endbereich etwa der halben Laufflächenbreite des Axialschenkels entspricht.

Mit dieser Konstruktion ist ein Wellendichtring geschaffen, dessen sämtliche Dichtlippen als Radialdichtlippen fungieren. Auf diese Weise ist eine große Verschiebbarkeit in axialer Richtung zwischen Laufring und Wellendichtring möglich, ohne daß die Dichtfunktion hierdurch beeinträchtigt wird. Durch die radiale Erstreckung des Laufringes in den Bereich zwischen Zusatzlippe und Haltevorrichtung wird darüber hinaus eine verbesserte Schmutzabweisung gewährleistet, da in Verbindung mit dem Wellendichtring ein Labyrinth gebildet wird und der Endbereich des Laufringes als Schleuderring wirkt.

Durch Abbiegen des Endbereiches des Axialschenkels um einen Winkel alpha kleiner als 90° bezüglich der Wellenachse wird eine Wirkungsverbesserung des Schleuderringes erzeugt. Gleichzeitig wird der Zusammenbau von Laufring und Wellendichtring vereinfacht, da der abgebogene Endbereich beim axialen Einschieben als Schnappverbindung mit der Haltevorrichtung zusammenwirkt.

Zur Senkung der Herstellungskosten besteht die Möglichkeit, die Zusatzlippe aus einem von der Schutzlippe abweichenden Werkstoff auszubilden, da die Zusatzlippe mit einem hinsichtlich der Dichtaufgabe weniger hochwertigen Werkstoff optimal funktioniert.

Überdies ist es von Vorteil, die Haltevorrichtung ebenfalls aus elastomerem Werkstoff zu bilden, hierdurch kann der Arbeitsgang des Umbördelns des Gehäuses entfallen. Die Haltevorrichtung kann gleichzeitig mit der Zusatzlippe am Gehäuse angeformt werden. Die auf diese Weise geschaffene elastische Schnappverbindung zwischen Laufring und Wellendichtring ermöglicht eine leichtere Demontage.

Um eine metallische Berührung zwischen Laufring und Wellendichtring zu vermeiden, ist der axiale Abstand zwischen beiden Bauteilen im eingebauten Zustand größer als die halbe Laufflächenbreite des Axialschenekls.

Darüber hinaus besteht die Möglichkeit, daß der Laufring eine zusätzliche axiale Lauffläche besitzt, die als Lauffläche einer Schutzlippe dient. Die Breite dieser Lauffläche entspricht vorzugsweise der Laufflächenbreite des Axialschenkels.

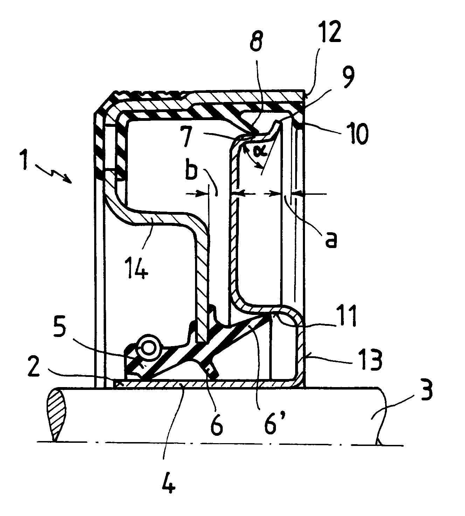

Ein Ausführungsbeispiel der Erfindung ist in der Zeichnung dargestellt und wird im folgenden näher erläutert:
Die Figur zeigt einen Wellendichtring (1), der mit einem Laufring (2) zusammenwirkt. Der Laufring (2) dieser Kassettendichtung sitzt mit einem axial gerichteten Schenkel (4), der als Lauffläche für die Dichtlippe (5) und Schutzlippe (6) dient, drehfest auf einer Welle (3). Neben der Schutzlippe (6) ist eine weitere Schutzlippe (6′) vorgesehen, die mit einer Lauffläche (11) korrespondiert. Darüber hinaus weist der Laufring (2) einen Axialschenkel (7) auf, der als Lauffläche einer Zusatzlippe (8) dient. Der Axialschenkel (7) ist am Endbereich (9) radial nach außen abgebogen und erstreckt sich radial zwischen Zusatzlippe (8) und einer Haltevorrichtung (10) in Form eines radial nach innen gerichteten elastomeren Vorsprunges. Die Konstruktion ist so ausgelegt, daß sich im richtig eingebauten Zustand, das heißt wenn die Stirnflächen (12,13) von Gehäuse (14) und Laufring (2) in einer Radialebene liegen, ein Axialabstand (a) zwischen Endbereich (9) und Haltevorrichtung (10) einstellt, welcher der halben Laufflächenbreite des Axialschenkels (7) entspricht.

Aufgrund des relativ großen Axialabstandes (a) zwischen Endbereich (9) und Haltevorrichtung (10) eignet sich die Dichtungseinheit für die Verwendung bei Wellen mit relativ großen Axialbewegungen. Da sämtliche Dichtlippen (5,6,6′,8) ausschließlich mit Axialschenkeln korrespondieren und so als Radialdichtlippen wirken, können die Dichtlippen (5,6,6′,8) unproblematisch der Axialbewegung folgen, ohne daß die Gefahr besteht, daß die Bauteile sich gegenseitig verschleißend berühren.

Da die Haltevorrichtung (10) aus elastomerem Werkstoff gebildet ist, kann diese zusammen mit der Zusatzlippe (8) bereits in der Vulkanisierform angeformt werden, wodurch ein Umbördeln des Gehäuses (14) entfallen kann.

Beim Zusammenbau des Wellendichtringes (1) erleichtert der unter einem Winkel alpha kleiner als 90° geneigte Endbereich (9) das Einschieben des Laufringes (2).

## Patentansprüche

1. Wellendichtring mit einem Gehäuse zur drehfesten Aufnahme in einem Maschinenteil und einem profilierten Laufring, der im Einbauzustand die Welle mit einem axial gerichteten Schenkel drehfest und dicht umschließt, wobei der Schenkel als Lauffläche für eine am Gehäuse anvulkanisierte Dicht- und Schutzlippe aus elastomerem Werkstoff dient, sowie einer am radial außenliegenden Endbereich des Gehäuses angeordneten, radial nach innen sich erstreckenden Haltevorrichtung, die einen Radialschenkel des Laufringes übergreift, so daß vor dem Einbau Wellendichtring und Laufring formschlüssig miteinander verbindbar sind, und mit mindestens einer Zusatzlippe zur Bildung eines Raumes zwischen Schutzlippe und Zusatzlippe, wobei der Laufring einen radial außenliegenden Axialschenkel aufweist und die Zusatzlippe sich radial zwischen Axialschenkel und Gehäuse erstreckt, dadurch geknnzeichnet, daß die Zusatzlippe (8) mit dem Gehäuse (14) verbunden ist und der Axialschenkel (7) des Laufringes (2) als Lauffläche für die Zusatzlippe (8) dient, wobei der Endbereich (9) des Axialschenkels (7) radial nach außen abgebogen ist und sich radial zwischen Zusatzlippe (8) und Haltevorrichtung (10) erstreckt, derart, daß der Axialabstand (a) zwischen Haltevorrichtung (10) und abgebogenem Endbereich (9) etwa der halben Laufflächenbreite des Axialschenkels (7) entspricht.

2. Wellendichtring nach Anspruch 1, dadurch gekennzeichnet, daß der Endbereich (9) des Axialschenkels (7) um einen Winkel alpha kleiner als 90° bezüglich der Wellenachse abgebogen ist.

3. Wellendichtring nach den Ansprüchen 1 und 2, dadurch gekennzeichnet, daß die Zusatzlippe (8) aus einem von der Schutzlippe (6,6′) abweichenden Werkstoff gebildet ist.

4. Wellendichtring nach den Ansprüchen 1 bis 3, dadurch gekennzeichnet, daß die Haltevorrichtung (10) aus elastomerem Werkstoff gebildet ist.

5. Wellendichtring nach mindestens einem der Ansprüche 1 bis 4, dadurch gekennzeichnet, daß der axiale Abstand ((b) zwischen Laufring (2) und Gehäuse (14) im eingebauten Zustand größer als die halbe Laufflächenbreite des Axialschenkels (7) ist.

6. Wellendichtring nach minestens einem der Ansprüche 1 bis 5, dadurch gekennzeichnet, daß der Laufring (2) eine zusätzliche axiale Lauffläche (11) aufweist, die als Lauffläche einer Schutzlippe (6′) dient.

7. Wellendichtring nach mindestens einem der Ansprüche 1 bis 6, dadurch gekennzeichnet, daß die Breite der Lauffläche (11) der Laufflächenbreite des Axialschenkels (7) entspricht.
